# EUROPÄISCHE PATENTANMELDUNG

(11) **EP 2 733 294 A2**
(43) Veröffentlichungstag der Anmeldung: **21.05.2014**
(21) Anmeldenummer: 13193408.5
(22) Anmeldetag: 19.11.2013
(51) Int. Cl.: E06B 3/62, E06B 5/16

(54) **Mehrlagige Glasscheibe mit abgedecktem Randverbund**

(30) Priorität: 20.11.2012 DE 202012104484 U
(71) Anmelder: Holzbau Schmid GmbH & Co. KG, 73099 Adelberg (DE)
(72) Erfinder: Schmid, Claus, 73099 Adelberg (DE)
(74) Vertreter: Ring & Weisbrodt

(57) **Zusammenfassung**

Die vorliegende Erfindung betrifft eine Verglasung, insbesondere Brandschutzverglasung zur Vermeidung des Durchtritts von Feuer und Rauch im Brandfall von einem Raum in einen anderen, die wenigstens zwei mittels eines umlaufenden Abstandhalters parallel voneinander beabstandete Glasscheiben aufweist, welche dadurch gekennzeichnet ist, dass die Glasscheiben randseitig umlaufend mit einer oder mehreren Abdeckleisten versehen sind, deren Breite zumindest der Breite des Abstandhalters entspricht. Desweiteren betrifft die vorliegende Erfindung ein entsprechendes Glaselement.

## Beschreibung

Die vorliegende Erfindung betrifft eine Verglasung, insbesondere Brandschutzverglasung zur Vermeidung des Durchtritts von Feuer und Rauch im Brandfall von einem Raum in einen anderen, wobei die Verglasung wenigstens zwei mittels eines umlaufenden Abstandhalters parallel voneinander beabstandete Glasscheiben aufweist, sowie eine Glastür und ein Glaselement mit einer solchen Verglasung.

Verglasungen der eingangs genannten Art sind aus dem Stand der Technik bekannt. So wird beispielsweise von der Firma Schott unter der Bezeichnung Pyran® Contraflam® eine solche mehrlagige Brandschutzverglasung angeboten. Bei dieser sind zwei parallel zueinander beabstandete Brandschutzscheiben mit einem umlaufenden Abstandhalter verbunden. Bei der Montage werden, wenn mehrere solcher Verglasungen nebeneinander angeordnet sind, die sich ergebenden Stoßfugen mit Silikon versiegelt. Der zur Ausbildung des Randverbundes zwischen den parallel beabstandeten Glasscheiben angeordnete Abstandhalter besteht häufig aus Polyurethan. Damit dieser von außen nach der Montage nicht sichtbar ist, wird die bekannte Verglasung im Bereich des Abstandhalters schwarz bedruckt, wodurch der Abstandhalter verdeckt wird. Diese Lösung ist auch aus ästhetischen Gesichtspunkten nicht immer zufriedenstellend. Zudem ergibt sich das Problem, dass bei Anordnung mehrerer solcher Verglasungen nebeneinander zwar der Randverbund durch die aufgedruckte schwarze Farbe verdeckt wird, nicht hingegen der Silikonfugenstoß.

Die Aufgabe der vorliegenden Erfindung besteht somit darin, eine verbesserte Lösung zur optischen Kaschierung des Randverbundes bei einer mehrlagigen Verglasung der eingangs genannten Art zur Verfügung zu stellen.

Diese Aufgabe wird gelöst durch eine Verglasung, insbesondere Brandschutzverglasung zur Vermeidung des Durchtritts von Feuer und Rauch im Brandfall von einem Raum in einen anderen, die wenigstens zwei mittels eines umlaufenden Abstandhalters parallel voneinander beabstandete Glasscheiben aufweist, wobei die Verglasung dadurch gekennzeichnet ist, dass die Glasscheiben randseitig umlaufend mit einer oder mehreren Abdeckleisten versehen sind, deren Breite zumindest der Breite des Abstandhalters entspricht.

Anstelle der aus dem Stand der Technik bekannten Bedruckung des Randbereichs werden also erfindungsgemäß eine oder mehrere Abdeckleisten auf die Glasscheiben aufgebracht. Die Breite dieser Abdeckleisten wird so angepasst, dass der Abstandhalter von beiden Flachseiten der Verglasung praktisch nicht mehr sichtbar ist. Hierbei kann die Abdeckleiste auch breiter als der Abstandhalter gewählt werden, damit dieser auch bei schrägen Betrachtungswinkeln nicht zu sehen ist.

In weiterer Ausgestaltung der erfindungsgemäßen Verglasung kann diese insgesamt profilfrei ausgebildet sein. Hiermit ist gemeint, dass die Verglasung selbst nicht mit umlaufenden Profilen versehen werden muss, wobei dennoch bei feststehenden Verglasungen Rahmenprofile vorgesehen sein können. Werden mehrere erfindungsgemäße Verglasungen neben- und / oder übereinander zu einem Glaselement kombiniert, so ist im Bereich der Stoßfugen zwischen benachbarten Verglasungen die Anbringung eines Profils nicht erforderlich.

Was das Material der Abdeckleisten betrifft, so kommen hierfür verschiedene Werkstoffe in Betracht. Vorzugsweise bestehen die Abdeckleisten aus einem nicht transparenten oder undurchsichtigen Material. Unter nicht transparenten Materialien werden auch opake Materialien verstanden, da auch diese geeignet sind, den Abstandhalter optisch zu kaschieren.

Besonders geeignete Materialien für die Abdeckleisten sind ausgewählt aus der Gruppe umfassend Metall, Kunststoff, Holz, Glas oder Kombinationen von diesen, wobei als Metalle insbesondere Edelstahl und Aluminium in Frage kommen.

Die Abdeckleisten können auf den Glasscheiben in jeder bekannten Weise befestigt sein. Bevorzugt werden die Abdeckleisten auf den Glasscheiben aufgeklebt, wofür ein entsprechender Klebstoff, eine Silikondichtungsmasse oder aber auch ein doppelsei-tiges Klebeband verwendet werden kann.

In einer weiterer bevorzugten Ausgestaltung der erfindungsgemäßen Verglasung schließt die Abdeckleiste weitestgehend bündig mit einer oder allen Stoßkanten der Glasscheibe ab. Auf diese Weise wird eine homogene Stoßkante realisiert. Die Glasscheiben sind häufig gefast, damit diese keine scharfen Kanten aufweisen. Unter weitestgehend bündig wird hierbei verstanden, dass der Abstandhalter unmittelbar an dem gefasten Bereich ansetzt.

Erfindungsgemäß ist vorgesehen, dass die Breite der Abdeckleiste zumindest der Breite des Abstandhalters entspricht. Um ein optisches Kaschieren des Abstandhal-ters auch aus schrägen Betrachtungswinkeln sicherzustellen, kann die Abdeckleiste den Abstandhalter um wenigstens 2 mm auf der der Stoßkante gegenüberliegenden Seite überragen, bevorzugt um wenigstens 3 mm.

Nach einer besonders bevorzugten Ausführungsform der erfindungsgemäßen Vergla-sung sind die Glasscheiben im Bereich der Abdeckleisten mit einem Stufenfalz versehen, in welchen die Abdeckleisten eingesetzt sind, wobei die Tiefe des Stufenfalzes insbesondere so gewählt ist, dass die Abdeckleisten bündig mit der Oberfläche der Glasscheiben außerhalb des Stufenfalzes abschließen. Diese Anordnung hat den Vorteil, dass die Oberfläche der Glasscheibe und der Abdeckleiste miteinander fluchten. Damit wirkt die Verglasung nicht nur optisch insgesamt homogener, sondern es sind dadurch auch weniger Kanten vorhanden, in denen sich Schmutz ansammeln könnte. Zudem wird auch die Reinigung durch die homogenere Oberfläche insgesamt erleichtert.

Bei der vorgenannten Ausgestaltung kann der Stufenfalz dadurch gebildet sein, dass jede Glasscheibe aus mehrlagigem Verbundglas besteht, insbesondere aus Verbund-sicherheitsglas, gewünschtenfalls auch feuerfest, und die äußere Lage des Verbundglases um die Breite der Abdeckleiste von der Stoßkante der Glasscheibe zurückspringt. Auf diese Weise lässt sich ein randseitig umlaufender Stufenfalz verhältnis-mäßig einfach realisieren. Zudem kann die Dicke der Abdeckleiste variabel an die Tiefe des Stufenfalzes angepasst werden, die sich durch das randseitige Weglassen der jeweils äußersten Lage des Verbundglases ergibt, sodass die vorbeschriebenen miteinander fluchtenden Oberfläche von Glasscheibe und Abdeckleiste ergeben.

Bei der erfindungsgemäßen Verglasung ist der Abstandhalter umlaufend randseitig angeordnet, wobei dieser vom Rand her nach innen versetzt sein kann oder, was bevorzugt ist, wie vorbeschrieben weitestgehend bündig mit den Stoßkanten der Glasscheiben abschließen. Insbesondere im letzteren Fall ist es weiter bevorzugt, dass die Verglasung an ihren Stoßkanten mit einer Abdeckschicht versehen ist, welche sich vorzugsweise zumindest über die Stoßkanten der Glasscheiben und die außenliegen-de Fläche des Abstandhalters erstreckt. Die Abdeckschicht verdeckt den mehrlagigen Aufbau und verhindert zudem ein Eindringen von Feuchtigkeit in das Innere der Ver-glasung, wodurch möglicherweise Trübungen hervorgerufen werden könnten.

Die Abdeckschicht kann beispielsweise als Lackschicht, als Klebeband oder in Form eines Kunststoffauftrages aufgebracht sein, wobei die Abdeckschicht insbesondere nicht transparent oder undurchsichtig ist. Unter dem Begriff "nicht transparent" werden auch opake Materialien verstanden.

Nach einer besonders bevorzugten Ausführungsform der erfindungsgemäßen Vergla-sung sind die Glasscheiben als feuerfeste Glasscheiben ausgebildet.

Weiterhin kann vorgesehen sein, dass der vom Abstandhalter zwischen den Glasscheiben eingeschlossene Raum mit einem Brandschutzgel gefüllt ist. Mit Brand-schutzgel bzw. Hydrogel gefüllte Brandschutzscheiben sind beispielsweise in der EP 1 820 931 A1 und in der DE 10 2005 018 842 A1 beschrieben. Diese Brandschutzscheiben haben gegenüber den ansonsten vielfach eingesetzten Brandschutzscheiben mit festen silikathaltigen intumeszierenden Zwischenschichten, beispielsweise auf Wasserglasbasis, den Vorteil, dass sie ein geringeres Flächengewicht bei vergleichbarer Feuerwiderstandsklasse erreichen können. Das bedeutet nicht nur einen einfacheren Transport der Scheiben, sondern auch, dass die Halterung und Rahmenkonstruktion wegen der geringeren Last leichter ausgelegt werden können.

Ferner sind die mit Brandschutzgel gefüllten Brandschutzscheiben gegenüber den Scheiben mit festen silikathaltigen Intumeszenz-Zwischenschichten weitaus weniger anfällig gegen eindringende Feuchtigkeit, welche bei den letztgenannten zur Trübung der Zwischenschicht führt, was den Austausch der Scheibe erfordert.

Mit einem Brandschutzgel gefüllte Brandschutzscheiben bestehen üblicherweise aus zwei oder mehr parallel beabstandeten Glasscheiben aus Einscheibensicherheitsglas (ESSG), die wie vorstehend beschrieben über einen in ihren Randbereichen zwischen den Glasscheiben liegenden umlaufenden Abstandhalter aus beispielsweise Polyurethan fixiert und miteinander verbunden sind. Durch eine Öffnung in diesem Abstand-halter werden das Brandschutzgel oder die Vorkomponenten eingefüllt, wobei im letzten Fall die Gelbildung durch Polymerisation zum Hydrogel im mit der Mischung ausgefüllten Hohlraum zwischen den Glasscheiben erfolgt. Die im Rahmen der Erfindung eingesetzten Brandschutzgele können auch Additive beinhalten wie Silikate, UV-Schutzmittel oder auch Farbstoffe. Das in diesen Brandschutzscheiben eingefüllte Gel wird bei der Polymerisation in der Regel nicht vollkommen fest, sondern behält je nach dem Vernetzungsgrad und der Menge an Monomeren in Bezug auf den Wassergehalt eine mehr oder minder feste gelartige Konsistenz.

Ein weiterer Gegenstand der vorliegenden Erfindung ist eine Glastür oder ein Fenster, insbesondere eine Brandschutz-Glastür oder ein Brandschutz-Fenster, in die wenigstens eine erfindungsgemäße Verglasung eingesetzt ist.

Weiterhin betrifft die vorliegende Erfindung ein Glaselement, insbesondere ein Brandschutzglaselement, in das wenigstens eine erfindungsgemäße Verglasung eingesetzt ist. Das Glaselement kann nur aus feststehenden Verglasungen aufgebaut sein oder aber auch eine oder mehrere verschließbare Öffnungen wie Türen und/ oder Fenster umfassen, wobei diese in herkömmlicher Weise ausgestaltet sein können oder aber auch ebenfalls erfindungsgemäße Verglasungen aufweisen können.

Nach einer bevorzugten Weiterbildung des erfindungsgemäßen Glaselements umfasst das Glaselement zumindest zwei Verglasungen, die an zumindest einer Stoßkante aneinandergrenzen, wobei zwischen den aneinandergrenzenden Stoßkanten der Verglasungen eine Dichtungsfuge vorgesehen ist, die insbesondere mit einem Dichtungsstreifen, Mineralwolle und/ oder einer Fugendichtmasse verfüllt ist, vorzugsweise mit Silikon oder einer intumeszierenden Fugendichtmasse.

Bei dieser Ausgestaltung können die Glasscheiben an den benachbarten Stoßkanten der zwei Verglasungen auf beiden Seiten mit jeweils einer Abdeckleiste versehen sein, deren Breite zumindest der Breite der Abstandhalter der zwei Verglasungen und der dazwischenliegenden Dichtungsfuge entspricht, wobei diese Abdeckleiste die Abstandhalter der Verglasungen auf denen der Stoßkanten der Glasscheiben gegenüberliegenden Längsseiten der Abstandhalter beidseitig insbesondere um jeweils wenigstens 2 mm überragt, bevorzugt um wenigstens 3 mm. Mit anderen Worten wird also bei dieser bevorzugten Ausführungsform im Stoßbereich zweier benachbarter Verglasungen auf jeder Flachseite nur eine durchgehende Abdeckleiste verwendet, die nicht nur die Abstandhalter der aneinandergrenzenden Verglasungen, sondern auch den dazwischenliegenden Fugenabschnitt überdeckt.

Bei dieser Ausgestaltung ist es besonders vorteilhaft, wenn die Glasscheiben der Verglasungen zumindest im Bereich der aneinandergrenzenden Stoßkanten, vorzugsweise aber umlaufend, mit einem Stufenfalz in der oben beschriebenen Weise versehen sind. Wird die Dicke der Abdeckleiste der Tiefe der Stufenfalzen entsprechend gewählt, ergibt sich eine durchgehende Oberfläche, da die Oberflächen der Glasscheiben und die der Abdeckleiste miteinander fluchten.

Bei der vorbeschriebenen Ausführungsform, bei der der Bereich zwischen zwei aneinandergrenzenden Verglasungen mit nur einer Abdeckleiste versehen ist, ist es weiter bevorzugt, dass die Abdeckleisten, die nicht an einer Stoßkante zwischen zwei benachbarten Verglasungen angeordnet sind, bündig mit den jeweiligen Stoßkanten der Verglasungen abschließen.

Die vorliegende Erfindung wird im Folgenden anhand der in den Figuren 1 bis 3 gezeigten Ausführungsbeispiele näher erläutert. Darin zeigt
- Fig. 1: eine erste Ausführungsform eines erfindungsgemäßen Glaselements,
- Fig. 2: eine zweite Ausführungsform eines erfindungsgemäßen Glaselements sowie
- Fig. 3: eine ausschnittsweise Darstellung einer Brandschutz-Glastür mit einer erfindungsgemäßen Verglasung.

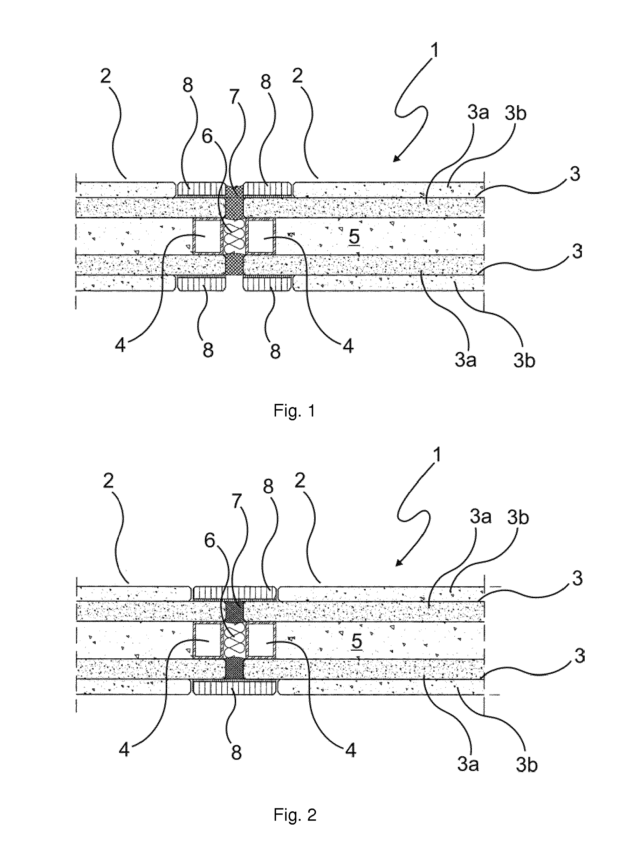

In Fig. 1 ist ein erfindungsgemäßes Glaselement 1 in Schnittansicht von oben ausschnittsweise dargestellt. Das Glaselement 1 besteht aus zwei Verglasungen 2, die an ihren Stoßkanten aneinandergrenzen. Das Glaselement ist als Brandschutz-Glaselement ausgestaltet. Jede der beiden Verglasungen 2 besteht aus zwei Scheiben 3 aus Verbundsicherheitsglas, die jeweils aus zwei Lagen 3a, 3b aufgebaut sind. Die Scheiben 3 sind parallel voneinander mittels eines umlaufenden Abstandhalters 4 beabstandet. Die Scheiben 3 sind gefast, damit diese keine scharfen Kanten aufweisen. Der Abstandhalter 4 setzt unmittelbar an dem gefasten Bereich an. Der von den Scheiben 3 und dem Abstandhalter 4 eingeschlossene Zwischenraum ist mit einem Brandschutzgel 5 gefüllt.

Zwischen den beiden Verglasungen 2 befindet sich eine Dichtungsfuge, die im Bereich zwischen den Abstandhaltern 4 der beiden Verglasungen 2 mit Mineralwolle 6 und im Außenbereich mit einer Silikonfuge 7 versiegelt ist. Im Bereich der Stoßkanten der Scheiben 3 sind Stufenfalze ausgebildet, in denen die jeweils äußere Lage 3b der Scheibe von der Stoßkante der inneren Lage 3a der Scheibe zurückspringt. Im Bereich dieses Stufenfalzes ist eine Abdeckleiste 8 aus Edelstahl aufgeklebt, deren Dicke der Dicke der äußeren Lage 3b der Scheibe 3 entspricht, sodass die Oberflächen der Scheibe 3 und der Abdeckleiste 8 miteinander fluchten. Die Abdeckleiste 8 ist breiter als der Abstandhalter 4. Die Abdeckleiste 8 setzt bündig an der Stoßkante der Scheiben 3 an und überragt den Abstandhalter 4 auf der anderen Seite, sodass der Abstandhalter 4 bei Draufsicht auf die Verglasung 2 optisch verdeckt ist.

In Fig. 2 ist eine alternative Ausführungsform des in Fig. 1 dargestellten Glaselements 1 abgebildet. Die Brandschutzverglasungen 2 haben einen identischen Aufbau wie bei der in Fig. 1 dargestellten Ausgestaltung. Der Unterschied besteht vorliegend darin, dass bei dem in Fig. 2 dargestellten Glaselement 1 beidseitig eine durchgehende Abdeckleiste 8 vorgesehen ist, die sich von der linken dargestellten Verglasung 2 über den Stoßfugenbereich bis zur rechten Verglasung 2 erstreckt und dabei beide Abstandhalter 4 sowie auch die Silikonfuge 7 verdeckt. Auch bei dieser Ausführungsform ist die Materialstärke der Abdeckleiste 8 derart gewählt, dass nachdem Einsetzen der Abdeckleiste 8 in den Stufenfalz die Oberflächen der jeweiligen Scheiben 3 mit derjenigen der Abdeckleiste 8 fluchten, also eine weitestgehend durchgängige Oberfläche ausbilden.

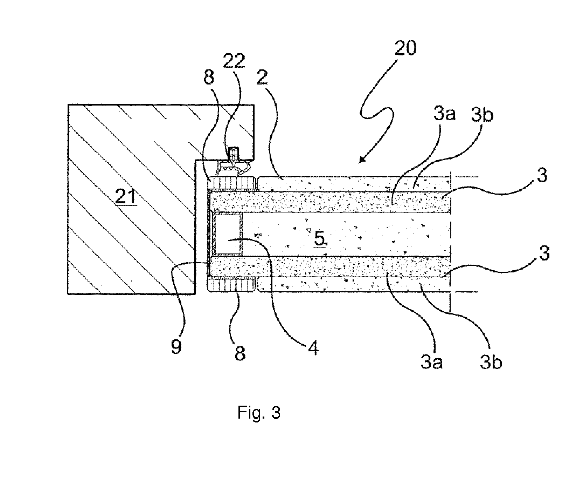

In Fig. 3 ist eine Schnittdarstellung einer Brandschutz-Glastür 20 gezeigt. Bei der Brandschutz-Glastür 20 ist das Türblatt durch eine erfindungsgemäße Verglasung 2 gebildet, die gegen eine Türzarge 21 mit einer Lippendichtung 22 im geschlossenen Zustand abgedichtet wird. Bei der Darstellung in Fig. 3 dient die obere der beiden Abdeckleisten 8 als Dichtfläche für die Lippendichtung 22.

Die Verglasung 2 ist bei dieser Ausführungsform im Bereich ihrer Stoßkante mit einer Abdeckschicht 9 aus schwarzem Kunststoff versehen, so dass der Abstandhalter 4 auch bei Draufsicht auf die Stoßkante durch die Abdeckschicht 9 optisch kaschiert ist. Die Abdeckschicht 9 erstreckt sich im Bereich zwischen den beiderseitigen Abdeckleisten 8 über die Stoßkanten der jeweils inneren Lagen 3a der beiden Scheiben 3, sowie über den dazwischen angeordneten Abstandhalter 4.

Auch bei dieser Ausführungsform sind die Verbundglasscheiben 3 im Bereich ihrer Stoßkante mit einem Stufenfalz versehen, in welchen die beiden Abdeckleisten 8 in der Weise eingesetzt sind, dass die Außenflächen der Abdeckleisten 8 mit denjenigen der Verbundglasscheiben 3 fluchten, so dass eine homogene Oberfläche ausgebildet ist.

### Bezugszeichenliste

- 1: Glaselement
- 2: Verglasung
- 3: Scheibe aus Verbundsicherheitsglas
- 3a: innere Lage der Scheibe
- 3b: äußere Lage der Scheibe
- 4: Abstandhalter
- 5: Brandschutzgel
- 6: Mineralwolle
- 7: Fugendichtmasse
- 8: Abdeckleiste
- 9: Abdeckschicht
- 20: Brandschutz-Glastür
- 21: Türzarge
- 22: Lippendichtung

## Patentansprüche

1. Verglasung (2), insbesondere Brandschutzverglasung zur Vermeidung des Durchtritts von Feuer und Rauch im Brandfall von einem Raum in einen anderen, die wenigstens zwei mittels eines umlaufenden Abstandhalters (4) parallel voneinander beabstandete Glasscheiben (3) aufweist,
**dadurch gekennzeichnet, dass**
die Glasscheiben (3) randseitig umlaufend mit einer oder mehreren Abdeckleisten (8) versehen sind, deren Breite zumindest der Breite des Abstandhalters (4) entspricht.

2. Verglasung nach Anspruch 1, **dadurch gekennzeichnet, dass** die Verglasung (2) insgesamt profilfrei ist.

3. Verglasung nach Anspruch 1 oder 2, **dadurch gekennzeichnet, dass** die Abdeckleisten (8) aus einem nicht transparenten oder undurchsichtigen Material bestehen.

4. Verglasung nach einem der vorstehenden Ansprüche, **dadurch gekennzeichnet, dass** die Abdeckleisten (8) aus einem Material bestehen, das ausgewählt ist aus der Gruppe umfassend Metall, Kunststoff, Holz, Glas oder Kombinationen von diesen.

5. Verglasung nach einem der vorstehenden Ansprüche, **dadurch gekennzeichnet, dass** die Abdeckleisten (8) auf die Glasscheiben (3) aufgeklebt sind.

6. Verglasung nach einem der vorstehenden Ansprüche, **dadurch gekennzeichnet, dass** die Abdeckleiste (8) bündig mit einer oder allen Stoßkanten der Glasscheibe (3) abschließt.

7. Verglasung nach einem der vorstehenden Ansprüche, **dadurch gekennzeichnet, dass** die Abdeckleiste (8) den Abstandhalter (4) auf der der Stoßkante der Glasscheibe (3) gegenüberliegenden Längsseite des Abstandhalters (4) um wenigstens 2 mm überragt, bevorzugt um wenigstens 3 mm.

8. Verglasung nach einem der vorstehenden Ansprüche, **dadurch gekennzeichnet, dass** die Glasscheiben (3) im Bereich der Abdeckleisten (8) mit einem Stufenfalz versehen sind, in welche die Abdeckleisten (8) eingesetzt sind, wobei die Tiefe des Stufenfalzes insbesondere so gewählt ist, dass die Abdeckleisten (8) bündig mit der Oberfläche der Glasscheiben (3) außerhalb des Stufenfalzes abschließen.

9. Verglasung nach Anspruch 8, **dadurch gekennzeichnet, dass** der Stufenfalz dadurch gebildet ist, dass jede Glasscheibe (3) aus mehrlagigem Verbundglas besteht, insbesondere aus Verbundsicherheitsglas, und die äußere Lage des Verbundglases um die Breite der Abdeckleiste (8) von der Stoßkante der Glasscheibe (3) zurückspringt.

10. Verglasung nach einem der vorstehenden Ansprüche, **dadurch gekennzeichnet, dass** der Abstandhalter (4) weitestgehend bündig mit den Stoßkanten der Glasscheiben (3) abschließt.

11. Verglasung nach Anspruch 10, **dadurch gekennzeichnet, dass** die Verglasung (2) an ihren Stoßkanten mit einer Abdeckschicht (9) versehen ist, welche sich insbesondere zumindest über die Stoßkanten der Glasscheiben (3) und die außenliegende Fläche des Abstandhalters (4) erstreckt.

12. Verglasung nach Anspruch 11, **dadurch gekennzeichnet, dass** die Abdeckschicht (9) als Lackschicht, als Klebeband oder in Form eines Kunststoffauftrages aufgebracht ist, wobei die Abdeckschicht (9) insbesondere nicht transparent oder undurchsichtig ist.

13. Verglasung nach einem der vorstehenden Ansprüche, **dadurch gekennzeichnet, dass** die Glasscheiben (3) als feuerfeste Glasscheiben ausgebildet sind.

14. Verglasung nach einem der vorstehenden Ansprüche, **dadurch gekennzeichnet, dass** der vom Abstandhalter (4) zwischen den Glasscheiben (3) eingeschlossene Raum mit einem Brandschutzgel (5) gefüllt ist.

15. Verglasung nach einem der vorstehenden Ansprüche, **dadurch gekennzeichnet, dass** die als Brandschutz-Glastür (20) oder Brandschutz-Fenster ausgeführt ist.

16. Glaselement (1), insbesondere Brandschutz-Glaselement,
**dadurch gekennzeichnet, dass**
in das Glaselement (1) wenigstens eine Verglasung (2) nach einem der Ansprüche 1 bis 14 eingesetzt ist.

17. Glaselement nach Anspruch 16, **dadurch gekennzeichnet, dass** das Glaselement (1) zumindest zwei Verglasungen (2) umfasst, die an zumindest einer Stoßkante aneinandergrenzen, wobei zwischen den aneinandergrenzenden Stoßkanten der Verglasungen (2) eine Dichtungsfuge (7) vorgesehen ist, die insbesondere mit einem Dichtungsstreifen, Mineralwolle (6) und/oder einer Fugendichtmasse (7) verfüllt ist, vorzugsweise mit Silikon oder einer intumeszierenden Fugendichtmasse.

18. Glaselement nach Anspruch 17, **dadurch gekennzeichnet, dass** die Glasscheiben (3) an den benachbarten Stoßkanten der zwei Verglasungen (2) auf beiden Seiten mit jeweils einer Abdeckleiste (8) versehen sind, deren Breite zumindest der Breite der Abstandhalter (4) der zwei Verglasungen (2) und der dazwischen liegenden Dichtungsfuge (7) entspricht, wobei diese Abdeckleiste (8) die Abstandhalter (4) der Verglasungen (2) auf den der Stoßkanten der Glasscheiben (3) gegenüberliegenden Längsseiten der Abstandhalter (4) beidseitig insbesondere um jeweils wenigstens 2 mm überragt, bevorzugt um wenigstens 3 mm.

19. Glaselement nach Anspruch 18, **dadurch gekennzeichnet, dass** die Abdeckleisten (8), die nicht an einer Stoßkante zwischen zwei benachbarten Verglasungen (2) angeordnet sind, bündig mit den jeweiligen Stoßkanten der Verglasungen (2) abschließen.
